Europäisches Patentamt

European Patent Office

Office européen des brevets

(19)

(11) Numéro de publication : **0 520 918 A1**

(12) **DEMANDE DE BREVET EUROPEEN**

(21) Numéro de dépôt : **92440078.1**

(22) Date de dépôt : **26.06.92**

(51) Int. Cl.⁵ : **A01B 33/02,** A01B 15/16

(30) Priorité : **28.06.91 FR 9108274**

(43) Date de publication de la demande :
**30.12.92 Bulletin 92/53**

(84) Etats contractants désignés :
**BE DE ES FR GB IT NL**

(71) Demandeur : **KUHN S.A.**
**4, Impasse des Fabriques**
**F-67700 Saverne (FR)**

(72) Inventeur : **Kirch, Michel**
**2, rue du Canal**
**F-57430 Sarralbe (FR)**

(54) **Machine agricole de travail du sol comportant un rotor qui s'étend transversalement à la direction de travail et munie d'outils de nettoyage perfectionnés.**

(57) La présente invention concerne une machine agricole de travail du sol (1) destinée à être liée à un véhicule moteur. Selon l'invention, son châssis supporte au moins un outil de nettoyage (34) présentant une forme destinée à épouser au moins partiellement la forme de la partie active (19) de l'organe de travail du sol (18) lors de la rotation du rotor (13).

FIG. 4

EP 0 520 918 A1

La présente invention concerne une machine agricole de travail du sol comportant un châssis qui supporte un rotor tournant autour de son axe longitudinal s'étendant transversalement à la direction de travail, lequel rotor comprend un support central muni d'au moins un outil de travail du sol comportant à sa périphérie au moins un organe de travail du sol du type "bêche" ou "lame" par exemple.

Il est connu dans l'état de la technique une telle machine (Brevet Européen N° 0 217 720) dont l'axe longitudinal du rotor s'étend obliquement à la direction de travail. Le support central de ce rotor comporte une âme centrale sur laquelle sont agencés des flasques régulièrement espacés les uns des autres. A la périphérie de chaque flasque sont rapportées, de manière équidistante, plusieurs bêches courbées dont la courbure est dirigée vers l'extrémité du rotor la plus en avant. Afin de réaliser un mélange intime de matière organique et de terre, le rotor ci-décrit est entraîné en rotation par la prise de force du tracteur auquel est attelée cette machine.

En pratique, il s'est cependant avéré que dans certaines conditions difficiles, le travail de cette machine connue n'était pas optimal. En effet, lorsque cette machine est par exemple amenée à travailler un sol comportant de nombreux résidus, comme cela est le cas notamment après une récolte de maïs grains, on constate souvent qu'une partie des résidus s'enroule autour des bêches. Il en résulte un manque d'efficacité des bêches et un alourdissement du rotor. Ce faisant, le mélange de matière organique et de terre est mal assuré.

Le but de la présente invention est de créer une machine agricole de travail du sol travaillant mieux le sol.

A cet effet, il est prévu selon l'invention que le châssis supporte également au moins un outil de nettoyage présentant une forme destinée à épouser au moins partiellement la forme de la partie active de l'organe de travail du sol lors de la rotation du rotor.

Grâce à cette caractéristique de l'invention, dès que des résidus commencent à s'enrouler autour de la partie active de l'organe de travail du sol, ils en sont immédiatement écartés par l'outil de nettoyage.

Il en est de même dans les terres collantes où le fait de nettoyer continuellement l'organe de travail du sol permet d'éviter le bourrage du rotor.

Etant donné que la partie active de l'organe de travail du sol a été nettoyée avant que celle-ci ne retravaille le sol, la puissance utile à l'avancement de la machine et, le cas échéant, à l'entraînement du rotor, est substantiellement réduite.

Selon une caractéristique supplémentaire de l'invention, il est prévu que l'outil de travail du sol présente plusieurs organes de travail du sol, disposés au moins sensiblement dans un plan orthogonal à l'axe longitudinal du rotor. Grâce à une telle disposition, tous ces organes de travail du sol peuvent être nettoyés par un seul outil de nettoyage.

Avantageusement, les organes de travail du sol de l'outil de travail du sol sont au moins sensiblement identiques et fixés de manière équidistante à la périphérie du support central.

La liaison de chaque organe de travail du sol avec le support central peut être réalisée au moyen d'au moins une vis.

Dans des réalisations très intéressantes, il est aussi prévu que le support central comporte une âme centrale équipée d'une pluralité de flasques munis chacun d'organes de travail du sol.

Selon une autre caractéristique de l'invention, il est encore prévu que la forme de l'outil de nettoyage épouse au moins partiellement la forme de(s) l'arête(s) frontale(s) de l'outil de travail du sol lors de la rotation du rotor.

Chaque arête frontale peut aussi être taillée en biseau, de sorte que l'avant de ladite arête frontale s'étende avantageusement du côté de l'outil de nettoyage.

Pour nettoyer la (les) partie(s) active(s) de l'outil de travail du sol sur toute(s) sa (leur) hauteur, l'outil de nettoyage s'étend au moins sensiblement entre le support central et le sommet de l'outil de travail du sol.

Par ailleurs, l'outil de nettoyage s'étend au moins sensiblement derrière et plus haut que l'axe longitudinal du rotor pour ne pas gêner le déplacement vers l'arrière des mottes de terre arrachées par le rotor.

Afin d'éviter que des résidus et des mottes de terre collante ne s'accrochent à l'outil de nettoyage, il est prévu que sa largeur moyenne soit inférieure à 15 centimètres. De préférence, la largeur moyenne de l'outil de nettoyage pourra être comprise entre 7 et 2 centimètres.

Dans certaines des réalisations très intéressantes où le support central comporte des flasques équipés d'organes de travail du sol, l'outil de nettoyage pourra s'étendre d'un côté du flasque et les organes de travail du sol correspondants de l'autre côté dudit flasque. Ainsi, une partie de l'outil de nettoyage pourra aussi épouser la forme extérieure du flasque dans le but de la nettoyer.

En sus, il est prévu que, vue suivant l'axe longitudinal du rotor, l'arête frontale de chaque organe de travail du sol forme avec l'outil de nettoyage un angle aigu dont l'ouverture est dirigée vers l'extérieur du rotor. De ce fait, lors de la rotation du rotor, les résidus peuvent être coupés et dégagés progressivement de l'arête frontale de l'organe de travail du sol par l'outil de nettoyage.

Dans une réalisation particulièrement intéressante, l'outil de travail du sol peut être concave, de sorte que sa concavité soit dirigée vers une extrémité longitudinale du rotor.

Dans une telle réalisation, l'outil de nettoyage peut alors collaborer avec la face convexe de l'organe de travail du sol.

En outre, l'axe longitudinal du rotor pourra s'étendre, en vue de dessus, obliquement par rapport à la direction de travail, de telle manière que la concavité de l'outil de travail du sol soit dirigée vers l'extrémité longitudinale du rotor la plus en avant.

De plus, lorsque le support central est muni de plusieurs outils de travail du sol, les zones de travail de deux outils de travail du sol adjacents pourront se recouvrir au moins partiellement.

Selon une autre caractéristique supplémentaire de l'invention, il est prévu que l'outil de nettoyage soit fixé au châssis au moyen d'une structure support.

Cette structure support comporte un bras auquel est fixé l'outil de nettoyage, de sorte que, vu suivant le sens de rotation du rotor, le bras s'étende derrière ledit outil de nettoyage.

De plus, l'outil de nettoyage est fixé au bras au moyen d'au moins une vis.

Afin de permettre un positionnement précis de l'outil de nettoyage par rapport à l'outil de travail du sol, il est encore prévu que l'outil de nettoyage et/ou le bras comporte(nt) au moins un trou oblong traversé par ladite vis et s'étendant au moins sensiblement parallèlement à l'axe longitudinal du rotor.

L'outil de nettoyage et la partie du bras correspondant pourront être au moins sensiblement tangents à la (aux) partie(s) active(s) de l'outil de travail du sol lors de la rotation du rotor.

Par ailleurs, compte tenu du sens d'avance au travail de la machine, le bras de la structure support s'étend vers l'arrière et vers le haut. La partie supérieure de la structure support, quant à elle, est liée au châssis au moyen de vis.

Selon une autre caractéristique très intéressante, il est prévu que le support central comporte une âme centrale de forme au moins sensiblement cylindrique, et que le châssis supporte en sus un élément de nettoyage destiné à nettoyer ladite âme centrale.

Préférentiellement, l'arête frontale de l'élément de nettoyage est au moins sensiblement en contact avec l'âme centrale du rotor, et elle s'étend au moins sensiblement parallèlement à l'axe longitudinal du rotor.

Lorsque le support central est muni de plusieurs outils de travail du sol, il est également prévu que la longueur de l'élément de nettoyage soit légèrement inférieure à la distance séparant deux outils de travail du sol adjacents.

En outre, vu suivant l'axe longitudinal du rotor, l'élément de nettoyage peut être au moins sensiblement tangent à l'âme centrale du rotor.

Selon une caractéristique particulièrement avantageuse, il est également prévu que l'élément de nettoyage s'étende derrière l'âme centrale et au moins sensiblement dans le prolongement de ladite âme centrale.

Dans des réalisations très intéressantes, l'élément de nettoyage peut être fixé, à l'une de ses extrémités longitudinales, au bras de l'outil de nettoyage.

Dans certaines de ces réalisations, la largeur de l'élément de nettoyage à son extrémité libre peut être inférieure à celle de son extrémité fixée au bras.

Selon une autre caractéristique de l'invention, il est encore prévu que cette machine soit destinée à être liée à un véhicule moteur et que son rotor soit entraîné en rotation par une source motrice dudit véhicule moteur.

D'autres caractéristiques de l'invention apparaissent dans la description suivante d'un exemple non limitatif de réalisation de l'invention faite en référence au dessin annexé sur lequel :

- la figure 1 représente une vue de dessus d'une machine agricole de travail du sol selon l'invention, liée à un tracteur agricole et placée dans une position de travail ;
- la figure 2 représente une vue arrière (suivant la flèche II de la figure 1), à une échelle agrandie, d'une partie de ladite machine agricole de travail du sol ;
- la figure 3 représente une coupe (suivant le plan III-III de la figure 2), à une échelle agrandie, du rotor tourné de quelques degrés autour de son axe longitudinal et d'un outil de nettoyage lié au châssis au moyen de la structure support ; et
- la figure 4 représente une vue arrière (suivant la flèche IV de la figure 3), à une échelle agrandie, d'une partie du rotor et d'un outil de nettoyage fixé à la structure support.

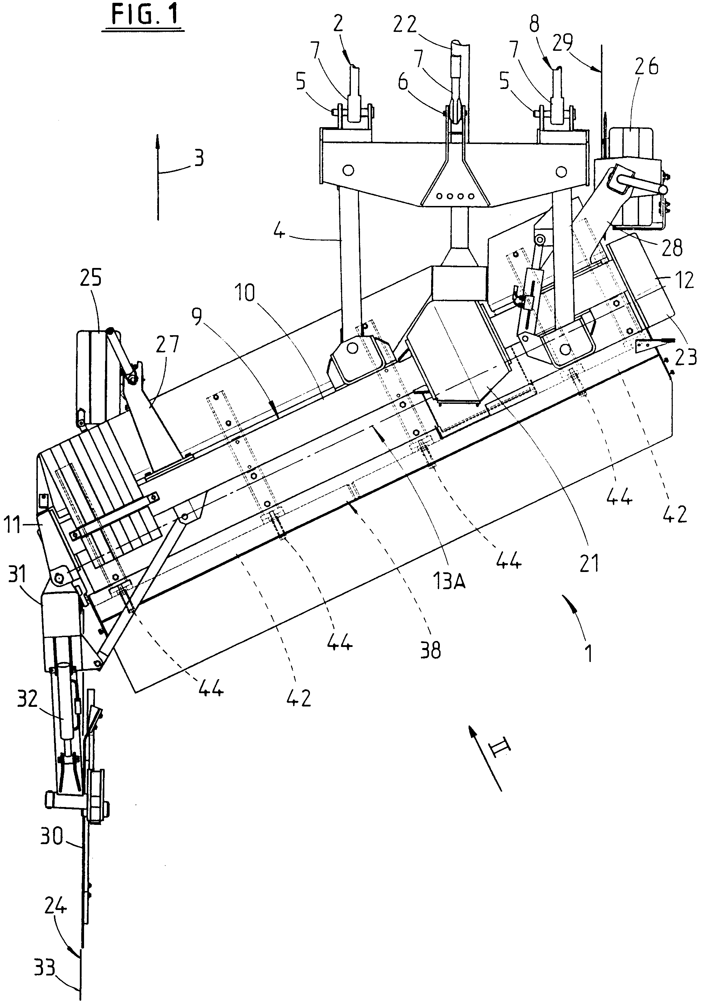

Sur la figure 1, la machine agricole de travail du sol (1) selon l'invention est attelée à un tracteur agricole (2) qui tire celle-ci dans le sens et la direction de travail (3).

A cet effet, la machine (1) est munie d'une structure d'attelage (4) qui comporte deux points d'attelage inférieurs (5) et un point d'attelage supérieur (6). Ces points d'attelage (5, 6) sont liés respectivement aux trois points d'attelage (7) du dispositif de relevage (8) du tracteur agricole (2).

La partie arrière de cette structure d'attelage (4) est liée au châssis (9) de la machine (1). Ce châssis (9) est composé principalement par une traverse (10) qui comporte à chacune de ses extrémités longitudinales une paroi latérale (11, 12) s'étendant vers le bas. En vue de dessus, le châssis (9) s'étend obliquement par rapport à la direction de travail (3), de sorte que, dans cet exemple de réalisation, son extrémité droite soit située plus en avant que son extrémité gauche. Entre les extrémités inférieures des parois latérales (11, 12) est agencé un rotor (13) dont l'axe longitudinal (13A) s'étend au moins sensiblement parallèlement à la traverse (10) du châssis (9).

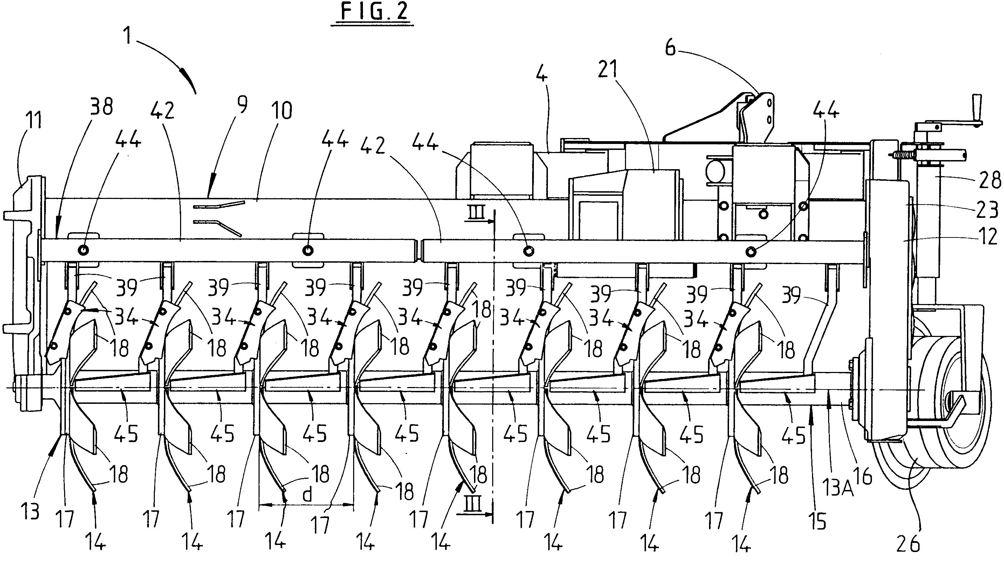

Comme il apparaît sur les figures 2 à 4, le rotor (13) comporte des outils de travail du sol (14) rapportés à un support central (15). Ce support central (15) comprend plus précisément une âme centrale cylindrique (16) équipée de flasques (17) en forme de disques et s'étendant au moins sensiblement dans des plans orthogonaux à l'axe longitudinal de ladite âme centrale (16). Par ailleurs, les flasques (17) de ce support central (15) sont régulièrement espacés les uns des autres et chacun porte un des outils de travail du sol (14). Dans cet exemple de réalisation, chaque outil de travail du sol (14) comporte un groupe de bêches (18) identiques et rapportées de manière équidistante à la périphérie de chaque flasque (17) du support central (15).

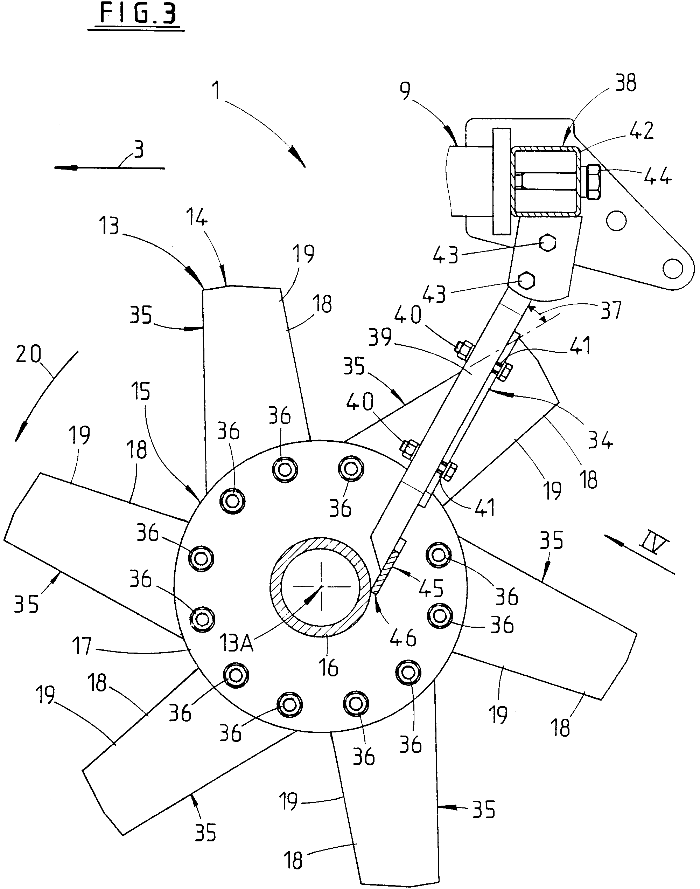

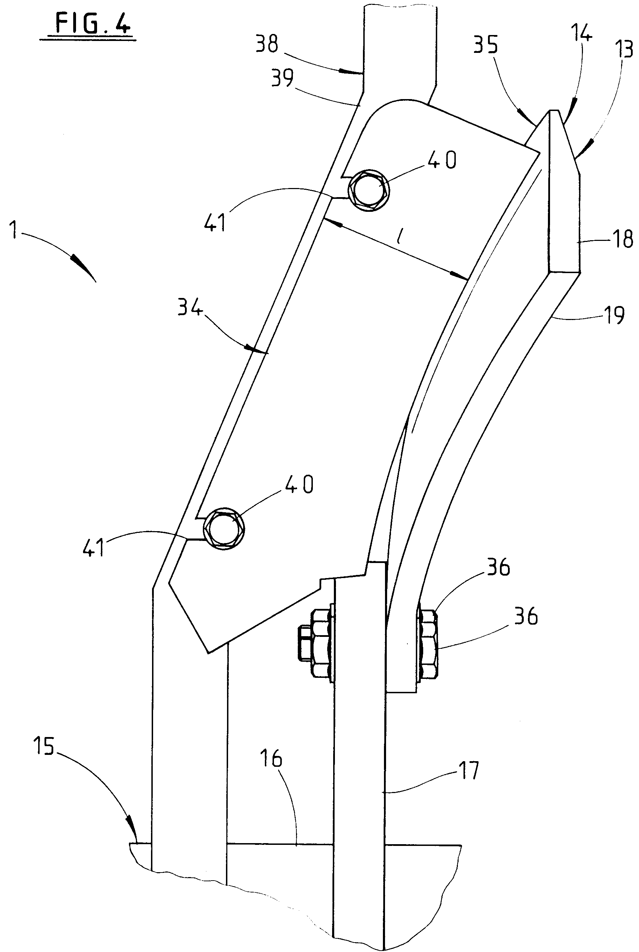

Ces bêches (18) ont leur partie active (19) (figures 3 et 4) courbée et la courbure de toutes les bêches (18) est dirigée vers l'extrémité droite du rotor (13) qui s'étend la plus en avant. De plus, l'angle que fait l'axe longitudinal (13A) du rotor (13) avec la direction de travail (3), est tel que les zones de travail de deux outils de travail du sol (14) adjacents se recouvrent au moins partiellement.

Pendant le travail, le rotor (13) est entraîné positivement (20) en rotation autour de son axe longitudinal (13A), de sorte qu'à sa partie frontale les outils de travail du sol (14) se déplacent vers le sol. A cet effet, le châssis (9) comporte sensiblement au niveau du plan de symétrie du tracteur (2), un carter de renvoi (21) qui est constitué sous forme de boîte de vitesses. Ce carter de renvoi (21) reçoit, par l'intermédiaire d'un arbre télescopique à joints universels (22) (figure 1) le mouvement de rotation de l'arbre de prise de force (non représenté) du tracteur (2), et le transmet au rotor (14) par l'intermédiaire d'un carter latéral (23) qui constitue la paroi latérale (12) de l'extrémité droite du châssis (9).

Au travail, la machine (1) est tirée par le tracteur (2) suivant le sens et la direction de travail (3). Simultanément, la prise de force dudit tracteur (2) entraîne en rotation le rotor (13) dans le sens positif (20) décrit précédemment. En tournant, les bêches (18) solidaires du support central (15) arrachent chacune une motte de terre. Comme le rotor (13) s'étend obliquement par rapport à la direction de travail, chaque bêche (18) imprime à la motte de terre arrachée, un mouvement qui est dirigé vers l'arrière et du côté de l'extrémité longitudinale du châssis (9) la plus en avant.

La partie active (19) de la bêche (18), retourne et projette la motte de terre arrachée dans la raie dégagée par les bêches (18) adjacentes. Toutes les mottes sont donc déplacées vers l'arrière et du côté de l'extrémité longitudinale du châssis (9) la plus en avant. De ce fait, il subsiste une raie (24), générée par l'outil de travail du sol (14) le plus en arrière du rotor (13) (figure 1). Celle-ci pourra être recouverte lors du prochain passage par les mottes que déplace l'outil de travail du sol (14) le plus en avant du rotor (13).

On voit aussi que devant ses deux extrémités longitudinales, le châssis (9) est muni de deux roues de soutènement (25, 26) qui roulent sur le sol pendant le travail. Ces roues de soutènement (25, 26) sont liées au châssis (9) au moyen d'une structure de liaison (27, 28) respective, constituée de telle sorte que l'on puisse modifier verticalement les positions des roues (25, 26) par rapport au châssis (9).

La roue (26), située la plus en avant du châssis (6), s'étend devant le carter latéral (23) et est destinée à rouler, durant le travail, dans la raie (29) générée lors du précédent passage.

Derrière l'extrémité la plus en arrière du châssis (9) est, par ailleurs, agencé un soc de stabilisation latérale (30) qui, au travail, s'engage dans la raie (24). Ce soc (30), connu de l'homme de l'art, est destiné à absorber la poussée latérale produite par l'action du rotor (13) sur le sol.

Une structure porteuse (31) lie le soc (30) au châssis (9) et lui autorise un déplacement en hauteur de manière au moins sensiblement parallèle au sol. C'est un vérin hydraulique (32) à double effet qui permet à l'utilisateur d'amener le soc (30), par l'intermédiaire de la structure porteuse (31), de sa position de transport (non représentée) dans laquelle il est relevé dans une position de travail (figure 1) dans laquelle il est destiné à venir en contact avec la muraille (33) de la raie (24), et vice versa. Au travail, l'utilisateur peut également, grâce à ce vérin hydraulique (32), intensifier à tout moment l'action du soc (30) s'il se produit un déplacement latéral de la machine (1) dû par exemple à un changement local de la structure du sol.

Selon l'invention, le châssis (9) de cette machine agricole de travail du sol (1) supporte également des outils de nettoyage (34) présentant une forme destinée à épouser au moins partiellement la forme des parties actives (19) des bêches (18), lors de la rotation du rotor (13). A cet effet, chaque outil de nettoyage (34) est agencé comme suit (figures 2 à 4). Il s'étend généralement entre deux outils de travail du sol (14) adjacents, de sorte que sa forme puisse épouser plus particulièrement la forme des arêtes frontales (35) et des faces convexes des bêches (18) de l'outil de travail du sol (14) correspondant. Chaque bêche (18) est liée de manière amovible à la périphérie extérieure du flasque (17), par l'intermédiaire de la partie inférieure de la face convexe de ladite bêche (18). Cette liaison est réalisée au moyen de deux boulons (36) dont les axes longitudinaux s'étendent au moins sensiblement parallèlement à l'axe longitudinal (13A) du rotor (13). Durant la rotation du rotor (13), l'outil de nettoyage (34) s'étend par ailleurs au moins sensiblement radialement entre le sommet des bêches (18) et le flasque (17) du support central (15). De ce fait, l'outil de nettoyage (34) peut également épouser la forme de la périphérie extérieure du flasque (17) pour la nettoyer. De plus, compte tenu du fait que les boulons (36) liant chaque bêche (18) au flasque (17), sont agencés à la périphérie extérieure du flasque (17), une extrémité longitudinale de ces boulons (36) peut aussi être nettoyée par l'outil de nettoyage (34).

En sus, grâce à un tel agencement, dès que des résidus commencent à s'enrouler autour de la partie active (19) de chaque bêche (18), ils en sont immédiatement écartés par les outils de nettoyage (34).

Il en est de même dans les terres collantes où le fait de nettoyer continuellement les bêches (18) permet d'éviter le bourrage du rotor (13).

Etant donné que la partie active (1) de chaque bêche (18) a été nettoyée avant que celle-ci ne retravaille le sol, la puissance utile à l'avancement de la machine (1) et la puissance nécessaire à l'entraînement du rotor (13) sont substantiellement réduites.

Sur les figures 2 et 4, il apparaît aussi que l'arête frontale (35) de chaque bêche (18) est taillée en biseau, de sorte que l'avant de ladite arête frontale (35) s'étende avantageusement du côté de l'outil de nettoyage (34). En vue suivant l'axe longitudinal (13A) du rotor (13), l'arête frontale (35) des bêches (18) forme aussi avec l'outil de nettoyage (34) un angle aigu (37), dont l'ouverture est dirigée vers l'extérieur du rotor (13). De ce fait, lors de la rotation du rotor (13), les résidus sont coupés et dégagés progressivement de l'arête frontale (35) par l'outil de nettoyage (34). En outre, la largeur moyenne (1) de l'outil de nettoyage (34) est inférieure à 15 centimètres et de préférence comprise entre 7 et 2 centimètres. Cela limite considérablement l'accumulation de terre collante sur l'outil de nettoyage (34). Avantageusement, l'outil de nettoyage (34) est également agencé, vu suivant l'axe longitudinal (13A) du rotor (13), à l'arrière dudit rotor (13) et plus haut que ledit axe longitudinal (13A). Ainsi, la présence de l'outil de nettoyage (34) entre deux outils de travail du sol (14) adjacents, ne gêne pas la projection vers l'arrière des mottes de terre arrachées par le rotor (13).

Sur les figures 2 à 4, on voit encore que l'outil de nettoyage (34) est lié au châssis (9) au moyen d'une structure support (38). Celle-ci comporte un bras (39) qui est fixé, vu suivant le sens de rotation (20) dudit rotor (13), derrière l'outil de nettoyage (34) au moyen de deux boulons (40) traversant ledit outil de nettoyage (34). Préférentiellement, l'outil de nettoyage (34) et la partie du bras (39) correspondante sont au moins sensiblement tangents aux parties actives (14) dudit outil de travail du sol (14) (figure 4).

Afin de pouvoir ajuster la position de l'outil de nettoyage (34) par rapport à l'outil de travail du sol (14), l'outil de nettoyage (34) comporte deux trous oblongs (41) s'étendant au moins sensiblement parallèlement à l'axe longitudinal (13A) du rotor (13) et traversés chacun par l'un des boulons (40) correspondants. On peut ainsi, avant serrage des boulons (40), positionner précisément l'outil de nettoyage (34) par rapport à l'outil de travail du sol (14) respectif.

La structure support (38) comporte également au moins un longeron (42) auquel est fixé chaque bras (39). En effet, compte tenu du sens d'avance au travail (3) de la machine (1), chaque bras (39) s'étend vers l'arrière et vers le haut pour être lié par son extrémité longitudinale supérieure au longeron (42) au moyen de deux boulons (43) (figure 3). Le longeron (42), quant à lui, s'étend au moins sensiblement parallèlement à l'axe longitudinal (13A) du rotor (13) et est lié à l'arrière du châssis (9) au moyen de vis (44). Dans l'exemple représenté, la machine (1) est munie avantageusement de deux longerons (42) équivalents s'étendant dans le prolongement longitudinal l'un de l'autre et agencés, en vue arrière, au moins sensiblement au niveau de la traverse (10) du châssis (9). Grâce à un tel agencement, il est aisément possible de mettre en place ou de retirer l'ensemble des outils de nettoyage (34) lorsque cela est souhaité.

Sur les figures 2 à 4, il apparaît en sus qu'à l'extrémité longitudinale inférieure de chaque bras (39) de la structure support (38) est fixé un élément de nettoyage (45) destiné à nettoyer l'âme centrale (16) du rotor (13). L'arête frontale (46) de l'élément de nettoyage (45) est, à cet effet, au moins sensiblement en contact avec l'âme centrale (16) et s'étend au moins sensiblement parallèlement à l'axe longitudinal (13A) du rotor (13). Pour assurer un bon nettoyage de l'âme centrale (16), l'élément de nettoyage (45) est placé dans une direction au moins sensiblement tangente à l'âme centrale (16) et sa longueur est légèrement inférieure à la distance (d) séparant deux outils de travail du sol (14) adjacents. Avantageusement, l'élément de nettoyage (45) s'étend derrière l'âme centrale (14) et dans le prolongement de celle-ci. Dans l'exemple de réalisation ci-décrit, on peut encore remarquer que l'élément de nettoyage (45) est fixé au bras (39) par l'intermédiaire de l'une de ses extrémités longitudinales et que la largeur de cette extrémité longitudinale est supérieure à la largeur de l'extrémité libre dudit élément de nettoyage (45).

On comprendra encore que diverses modifications peuvent être apportées à l'exemple de réalisation décrit sans sortir pour autant du domaine de protection tel que défini dans les revendications.

## Revendications

1. Machine agricole de travail du sol (1) comportant un châssis (9) qui supporte un rotor (13) tournant autour de son axe longitudinal (13A) s'étendant transversalement à la direction de travail (3), lequel rotor (13) comprend un support central (15) muni d'au moins un outil de travail du sol (14) comportant à sa périphérie au moins un organe de travail du sol (18) du type "bêche" ou "lame" par exemple, caractérisée par le fait que le châssis (9) supporte également au moins un outil de nettoyage (34) présentant une forme destinée à épouser au moins partiellement la forme de la partie active (19) de l'organe de travail du sol (18) lors de la rotation du rotor (13).

2. Machine agricole de travail du sol selon la revendication 1, caractérisée par le fait que l'outil de travail du sol (14) présente plusieurs organes de travail du sol (18) disposés au moins sensiblement dans un plan orthogonal à l'axe longitudinal (13A) du rotor (13).

3. Machine agricole de travail du sol selon la revendication 2, caractérisée par le fait que les organes de travail du sol (18) de l'outil de travail du sol (14) sont au moins sensiblement identiques et fixés de manière équidistante à la périphérie du support central (15).

4. Machine agricole de travail du sol selon l'une au moins des revendications 1 à 3, caractérisée par le fait que chaque organe de travail du sol (18) est fixé au support central (15) de manière amovible au moyen d'au moins une vis (36).

5. Machine agricole de travail du sol selon l'une au moins des revendications 1 à 4, caractérisée par le fait que le support central (15) comporte une âme centrale (16) équipée d'une pluralité de flasques (17), et que chacun desdits flasques (17) est muni d'organes de travail du sol (18).

6. Machine agricole de travail du sol selon l'une au moins des revendications 1 à 5, caractérisée par le fait que la forme de l'outil de nettoyage (34) épouse au moins partiellement la forme de(s) l'arête(s) frontale(s) (35) de l'outil de travail du sol (14) lors de la rotation du rotor (13).

7. Machine agricole de travail du sol selon la revendication 6, caractérisée par le fait que chaque arête frontale (35) est taillée en biseau.

8. Machine agricole de travail du sol selon la revendication 7, caractérisée par le fait que l'avant de l'arête frontale (35) qui est taillée en biseau s'étend du côté de l'outil de nettoyage (34).

9. Machine agricole de travail du sol selon l'une au moins des revendications 1 à 8, caractérisée par le fait que l'outil de nettoyage (34) s'étend au moins sensiblement entre le support central (15) et le sommet de l'outil de travail du sol (14).

10. Machine agricole de travail du sol selon l'une au moins des revendications 1 à 9, caractérisée par le fait que l'outil de nettoyage (34) s'étend au moins sensiblement derrière et plus haut que l'axe longitudinal (13A) du rotor (13).

11. Machine agricole de travail du sol selon l'une au moins des revendications 1 à 10, caractérisée par le fait que la largeur moyenne (1) de l'outil de nettoyage (34) est inférieure à 15 centimètres.

12. Machine agricole de travail du sol selon la revendication 11, caractérisée par le fait que la largeur moyenne (1) de l'outil de nettoyage (34) est comprise entre 7 et 2 centimètres.

13. Machine agricole de travail du sol selon la revendication 5, prise en combinaison avec l'une au moins des revendications 1 à 12, caractérisée par le fait que l'outil de nettoyage (34) s'étend d'un côté du flasque (17) et que les organes de travail du sol (18) correspondants sont fixés de l'autre côté dudit flasque (17).

14. Machine agricole de travail du sol selon la revendication 5, prise en combinaison avec l'une au moins des revendications 1 à 13, caractérisée par le fait que, vue suivant l'axe longitudinal (13A) du rotor (13), l'arête frontale (35) de chaque organe de travail du sol (18) forme avec l'outil de nettoyage (34) un angle aigu (37) dont l'ouverture est dirigée vers l'extérieur du rotor (13).

15. Machine agricole de travail du sol selon l'une au moins des revendications 1 à 14, caractérisée par le fait que l'outil de travail du sol (14) est concave, de sorte que sa concavité soit dirigée vers une extrémité longitudinale du rotor (13).

16. Machine agricole de travail du sol selon la revendication 15, caractérisée par le fait que l'outil de nettoyage (34) collabore avec la face convexe de l'organe de travail du sol (18).

17. Machine agricole de travail du sol selon la revendication 15 ou 16, caractérisée par le fait que, vu de dessus, l'axe longitudinal (13A) du rotor (13) s'étend obliquement par rapport à la direction de travail (3), de sorte que la concavité de l'outil de travail du sol (14) soit dirigée vers l'extrémité longitudinale du rotor (13) la plus en avant.

18. Machine agricole de travail du sol selon la revendication 17, caractérisée par le fait que le support central (15) est muni de plusieurs outils de travail du sol (14) et que les zones de travail de deux outils de travail du sol (14) adjacents se recouvrent au moins partiellement.

19. Machine agricole de travail du sol selon l'une au moins des revendications 1 à 18, caractérisée par le fait que l'outil de nettoyage (34) est fixé au châssis (9) au moyen d'une structure support (38).

**20.** Machine agricole de travail du sol selon la revendication 19, caractérisée par le fait que la structure support (38) comporte un bras (39) auquel est fixé l'outil de nettoyage (34), et que, vu suivant le sens de rotation (20) du rotor (13), le bras (39) s'étend derrière l'outil de nettoyage (34).

**21.** Machine agricole de travail du sol selon la revendication 20, caractérisée par le fait que l'outil de nettoyage (34) est fixé au bras (39) au moyen d'au moins une vis (40).

**22.** Machine agricole de travail du sol selon la revendication 21, caractérisée par le fait que l'outil de nettoyage (34) et/ou le bras (39) comporte(nt) au moins un trou oblong (41) traversé par ladite vis (40) et s'étendant au moins sensiblement parallèlement à l'axe longitudinal (13A) du rotor (13).

**23.** Machine agricole de travail du sol selon l'une au moins des revendications 20 à 22, caractérisée par le fait que l'outil de nettoyage (34) et la partie du bras (39) correspondante sont au moins sensiblement tangents à la (aux) partie(s) active(s) (19) de l'outil de travail du sol (14) lors de la rotation du rotor (13).

**24.** Machine agricole de travail du sol selon l'une au moins des revendications 20 à 23, caractérisée par le fait que compte tenu du sens d'avance au travail (3) de la machine de travail du sol (1), le bras (39) de la structure support (38) s'étend vers l'arrière et vers le haut, et que ladite structure support (38) est liée au châssis (9) au moyen de vis (44).

**25.** Machine agricole de travail du sol selon l'une au moins des revendications 1 à 24, caractérisée par le fait que le support central (15) comporte une âme centrale (16) de forme au moins sensiblement cylindrique, et que le châssis (9) supporte en sus un élément de nettoyage (45) destiné à nettoyer ladite âme centrale (16).

**26.** Machine agricole de travail du sol selon la revendication 25, caractérisée par le fait que l'arête frontale (36) de l'élément de nettoyage (35) est au moins sensiblement en contact avec l'âme centrale (16) du rotor (13).

**27.** Machine agricole de travail du sol selon la revendication 25 ou 26, caractérisée par le fait que l'arête frontale (46) de l'élément de nettoyage (45) s'étend au moins sensiblement parallèlement à l'axe longitudinal (13A) du rotor (13).

**28.** Machine agricole de travail du sol selon l'une au moins des revendications 25 à 27, caractérisée par le fait que le support central (15) est muni de plusieurs outils de travail du sol (14) et que la longueur de l'élément de nettoyage (45) est légèrement inférieure à la distance (d) séparant deux outils de travail du sol (14) adjacents.

**29.** Machine agricole de travail du sol selon l'une au moins des revendications 25 à 28, caractérisée par le fait que, vu suivant l'axe longitudinal (13A) du rotor (13), l'élément de nettoyage (45) est au moins sensiblement tangent à l'âme centrale (16) du rotor (13).

**30.** Machine agricole de travail du sol selon l'une au moins des revendications 25 à 29, caractérisée par le fait que, compte tenu du sens d'avance au travail (3) de la machine (1), l'élément de nettoyage (45) s'étend derrière l'âme centrale (16) et au moins sensiblement dans le prolongement de ladite âme centrale (16).

**31.** Machine agricole de travail du sol selon l'une au moins des revendications 20 à 24 prise(s) en combinaison avec l'une au moins des revendications 25 à 30, caractérisée par le fait que l'élément de nettoyage (45) est fixé, à l'une de ses extrémités longitudinales, au bras (39) de l'outil de nettoyage (34).

**32.** Machine agricole de travail du sol selon la revendication 31, caractérisée par le fait que la largeur de l'élément de nettoyage (45) à son extrémité libre est inférieure à celle de son extrémité fixée au bras (39).

**33.** Machine agricole de travail du sol selon l'une au moins des revendications 1 à 32, caractérisée par le fait qu'elle est destinée à être liée à un véhicule moteur (2) et que son rotor (13) est entraîné en rotation par une source motrice dudit véhicule moteur (2).

# FIG. 1

F I G . 2

EP 0 520 918 A1

## FIG.3

FIG.4

**Office européen des brevets**

# RAPPORT DE RECHERCHE EUROPEENNE

Numero de la demande

EP 92 44 0078

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-1 461 741 (VAN DER LELY)<br><br>* page 3, colonne de gauche, ligne 52 - ligne 58 *<br><br>* page 1, colonne de gauche, ligne 1 - ligne 6; figures 1-3 * | 1,2,5,6, 15,17, 18,23 | A01B33/02<br>A01B15/16 |
| Y | | 3,4,7,8, 11-14, 19-21,33 | |
| | --- | | |
| Y | EP-A-0 287 487 (KUHN)<br><br>* colonne 10, ligne 16 - ligne 26 *<br>* colonne 11, ligne 22 - colonne 12, ligne 5; figures 1-5 * | 3,4,7,8, 11-14, 19-21,33 | |
| | --- | | |
| X | WO-A-9 013 217 (JAVERLHAC)<br><br>* page 6, ligne 15 - ligne 23; revendication 1; figures 16-18 * | 1,2,6,9, 15,17 | |
| | --- | | **DOMAINES TECHNIQUES RECHERCHES (Int. Cl.5 )** |
| A | US-A-4 858 699 (POLTROCK)<br><br>* colonne 1, ligne 40 - ligne 54 *<br>* colonne 3, ligne 58 - colonne 4, ligne 11; figures 1-4 * | 1,25, 27-30 | A01B |
| | --- | | |
| D,A | EP-A-0 217 720 (KUHN)<br><br>----- | | |

Le présent rapport a été établi pour toutes les revendications

| Lieu de la recherche | Date d'achèvement de la recherche | Examinateur |
|---|---|---|
| LA HAYE | 20 AOUT 1992 | ECCETTO M. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 & : membre de la même famille, document correspondant

EPO FORM 1503 03.82 (P0402)